# EUROPEAN PATENT SPECIFICATION

(11) **EP 4 556 740 B1**
(45) Date of publication and mention of the grant of the patent: **21.10.2026**
(21) Application number: 23209950.7
(22) Date of filing: 15.11.2023
(51) Int. Cl.: F16D 65/00

(54) **ACTIVE BRAKE DUST PARTICLE FILTER SYSTEM**
AKTIVES BREMSSTAUBPARTIKELFILTERSYSTEM
SYSTÈME ACTIF DE FILTRE À PARTICULES DE POUSSIÈRE DE FREINAGE

(43) Date of publication of application: 21.05.2025
(73) Proprietor: MANN+HUMMEL GmbH, 71636 Ludwigsburg (DE)
(72) Inventor: KÜMMERLING, Volker, 71636 Ludwigsburg (DE); WÖRZ, Tobias, 71636 Ludwigsburg (DE); FICHTNER, Christian, 71636 Ludwigsburg (DE); JESSBERGER, Thomas, 71636 Ludwigsburg (DE)
(74) Representative: Mann + Hummel Intellectual Property

(56) References cited:
- EP-B1- 3 938 675
- WO-A1-2023/161067
- CN-B- 111 417 793
- US-A1- 2023 287 945
- US-B2- 8 701 844

## Description

### TECHNICAL FIELD

The invention relates to an active brake dust particle filter system including a brake assembly including at least one brake disc, and an airflow generating assembly including an airflow generator configured to generate an airflow, and at least one collector arranged at least partially surrounding the brake disc configured to collect brake dust particles from an ambient air of the brake disc via the airflow, and at least one pipe connecting the airflow generator and the collector for conducting the airflow from the collector towards the airflow generator.

### BACKGROUND ART

Such active brake dust particle filter systems are per se known in the art. They are advantageously used with brake assemblies in both mobile and stationary applications. Mobile applications include, for example, passenger or goods vehicles and rail vehicles. Stationary applications include, for example, brake assemblies used in wind turbines.

Brake dust particles are commonly produced upon actuation of the brake assembly. Typically, brake abrasion due to friction between a brake pad and the brake disc of the brake assembly results in the production of said brake dust particles. The brake dust particles constitute a (fine) dust load in the ambient air of the brake disc. Such (fine) dust load of the ambient air is harmful to humans and nature. It should therefore not escape into the environment.

To this end, the airflow generating assembly is provided. It includes at least one collector arranged at least partially surrounding the brake disc. In said collector ambient air of the brake disc containing brake dust particles accumulates. Said ambient air containing brake dust particles is then sucked from the collector towards the airflow generator via the airflow. The airflow is generated and maintained by the airflow generator. The airflow is led through the pipe which fluidically connects the collector and the airflow generator. The airflow containing ambient air loaded with brake dust particles may then filtered and cleaned from the harmful brake dust particles by means of a filter element. Said filter element is advantageously arranged at or in the vicinity of the airflow generator.

However, for example in mobile applications such as passenger vehicles, goods vehicles or rail vehicles, it is frequently encountered that said vehicles are operated in humid or wet conditions, for example fog or rain. In such conditions the ambient air of the brake disc does not only contain brake dust particles but also a potentially considerable amount of water or dirty water contaminated with dirt particles. Said water then becomes part of the airflow. It is sucked from the collector towards the airflow generator alongside the ambient air of the brake disc via the airflow.

This "dragging along" of water within the airflow is disadvantages and unwanted. The water may negatively affect the filter element provided for filtering and cleaning the ambient air from the brake dust particles. It may significantly reduce the filter performance of the filter element and decrease its service lifetime. Frequent replacements of the filter element may become necessary. Moreover, the intake of water may also have an impact on the airflow generator, for example damage it or impair its performance or suction capacity.

CN 111417793A discloses a filtration device that separates and collects particles and dust produced by the pads of a brake assembly. The disclosed filtration device includes a first separation unit having an annular air filtration medium in the housing of the device, in order to define an upstream zone where the air is admitted tangentially, and a downstream zone communicating with an outlet of the housing for discharging the purified air. The upstream zone communicates with a lower stage situated lower down, in which a second separation unit is located in order to separate water from particles that have fallen from the upstream zone. A filtration by the second unit is intended to collect clean water and possibly discharge the water by flow under the effect of gravity. The fallen particles remain trapped inside the device, under the first unit.

### SUMMARY

It is therefore an objective of the invention to provide an active brake dust particle filter system which can be reliably operated in humid or wet environmental conditions.

This objective is achieved by means of the brake dust particle filter of claim 1 in that the airflow generating assembly further includes a water separating assembly including at least one baffle element configured to separate water from the airflow, and a water drainage assembly including at least one drainage outlet for draining the separated water from the airflow generating assembly.

An active brake dust particle filter system is provided which can be reliably operated in humid or wet environmental conditions. This is achieved in a twofold step. Firstly, the water separating assembly is employed. The water separating assembly can include an inertial separator configured to inertially separate the water from the airflow. The water separating assembly operates as follows. The at least one baffle element is used to deflect the airflow from its original flow direction. However, due to its inertia, the water dragged along in the airflow can then no longer follow the deflected airflow. The water is separated from the airflow. It accumulates in the airflow generating assembly. Secondly, said accumulated water is then drained from the airflow generating assembly by means of the water drainage assembly. This is achieved in that the water is drained through the at least one drainage outlet. Altogether, the airflow generating assembly is therefore equipped to be reliably operated in humid or wet conditions. Any water initially present in the airflow is separated therefrom before the airflow reaches the airflow generator. Said water is hence neither capable of reducing the filter performance of the filter element or decrease its service lifetime nor of damaging the airflow generator or impairing its performance or suction capacity. The water separating assembly is arranged directly on the collector and fluidically downstream with respect to the airflow.

In this way the likelihood of water being dragged along and into the airflow generating assembly is further reduced. The water is separated from the airflow before the latter even enters into pipe. This avoids accumulation of water in the pipe and the airflow generator arranged fluidically downstream.

Further advantageous embodiments of the invention are provided in the dependent claims.

In another embodiment the water separating assembly includes at least two baffle elements arranged substantially parallel and opposite to each other as well as arranged substantially perpendicular to the airflow.

The at least two baffle elements include a first baffle element and a second baffle element. The first baffle element may be a first baffle plate. The second baffle element may be a second baffle plate. The first baffle element and the second baffle element are arranged within a baffle duct. The baffle duct is included in the water separating assembly. The baffle duct is arranged to receive the airflow and advance it further downstream towards the airflow generator. The baffle duct includes a central axis. The central axis of the baffle duct is substantially parallel to a lateral axis of the brake disc. The first baffle element is arranged substantially perpendicular to the central axis within the baffle duct. It is arranged on a first side wall of the baffle duct. The first baffle element provides a deflection angle for the airflow of less than 180°, preferably 90° or less. The second baffle element is arranged substantially parallel to the first baffle element. The second baffle element is arranged opposite the first baffle element. The second baffle element is arranged on a second wall of the baffle duct. The second wall of the baffle duct is substantially opposite the first wall of the baffle duct in a direction perpendicular to the central axis of the baffle duct. The second baffle element provides a deflection angle for the airflow of less than 180°, preferably 90° or less. The first baffle element and the second baffle element are spaced apart from each other by a predetermined distance. The first baffle element separates a first amount of dragged along water from the airflow. The second baffle element separates a second amount of dragged along water from the airflow. In this way, the airflow is gradually freed from the dragged along water. Any water not yet separated by means of the first baffle element may be separated by means of the second baffle element. It is to be understood that any number of baffle elements can be employed in this process. The number of two baffle elements is merely exemplary. An array with any number of baffle elements can be employed additionally or instead.

In another embodiment the water separating assembly includes at least one baffle element formed as a chamber-like protrusion, and at least one other baffle element extending at least in a section into the chamber-like protrusion.

The chamber-like protrusion defines a receiving volume for the airflow. The chamber-like protrusion is arranged within the baffle duct. The chamber-like protrusion extends substantially perpendicular to the central axis of the baffle duct. The chamber-like- protrusion extends beyond an outer circumference of the baffle duct at least in sections of the baffle duct. The chamber-like protrusion is arranged on the first wall of the baffle duct. The chamber-like protrusion provides a deflection angle for the airflow of 180°, preferably 90° or less. The other baffle element extends at least in sections into the chamber-like protrusion. To this end, the other baffle element is arranged opposite the chamber-like protrusion. The other baffle element is arranged on the second wall of the baffle duct. The other baffle element may be centered with respect to a diameter of the chamber-like protrusion seen in the direction of the central axis of the baffle duct. The other baffle element provides a deflection angle for the airflow of less than 180°, preferably 90° or less. Downstream with respect to the airflow of the chamber-like protrusion and the other baffle element a water collecting reservoir may be arranged. The water collecting reservoir serves to collect the water separated by means of the water separating assembly. The water collecting reservoir may be formed as a protrusion within the baffle duct. The water collecting reservoir includes a reservoir opening arranged for discharging the separated water collected inside the water collecting reservoir. The separated water can be discharged from the water collecting reservoir into an ambient space of the water separating assembly. A filter element can be arranged fluidically between the reservoir opening and the ambient space of the water separating assembly. The filter element serves to filter any brake dust particles out of the discharged airflow. The filter element may also serve to filter any dirt particles out of the discharged separated water. In a certain embodiment the reservoir opening may be identical to the drainage outlet of the water drainage assembly.

In another embodiment the water drainage assembly is arranged directly on the water separating assembly and is for establishing a fluidic connection for the separated water between an interior of the water separating assembly and an ambient space of the water separating assembly.

In this embodiment the separated water can be discharged from the active brake dust particle filter system directly at the location of the collector, more specifically in the vicinity of the brake disc. In this design any transport of the water dragged along in the airflow through the active brake dust particle filter system is avoided. No additional components for such a transport need be provided. Constructional space is saved. The risk of malfunction of the transport of the water through the active brake dust particle filter system is avoided. In this embodiment the reservoir opening of the water collecting reservoir may be identical to the drainage outlet of the water drainage assembly.

In one embodiment the water drainage assembly is arranged on the pipe and is for establishing a fluidic connection for the separated water between an interior of the pipe and an ambient space of the pipe, via the drainage outlet.

In this embodiment the separated water is led away from the water separating assembly, more specifically the brake disc. It is dragged along with the airflow into the suction collecting pipe and away from the brake assembly. At some location downstream between the water separating assembly and the airflow generator the water drainage assembly is arranged on the pipe. At this location the drainage outlet serves to discharge the separated water into the ambient space of the pipe. In this design any separated water is led away from both the water separating assembly as well as the brake assembly. Thus, any negative impact of the separated water on these or neighboring constructional elements can be avoided. The separated water may be discharged at a location where it cannot damage any components of the active brake dust particle filter system.

In another embodiment the water drainage assembly further includes a filter element for filtering the airflow, the filter element being arranged fluidically between the drainage outlet and the ambient space of the pipe.

The filter element is preferably provided in the form of a filter paper, a filter fabric, filter scrim or filter fleece. In particular, the filter element can be produced in a spunbonded or meltblown process or include such a fiber layer applied to a nonwoven or cellulose carrier. Furthermore, the filter element may be felted or needled. The filter element may have natural fibers, such as cellulose or cotton, or synthetic fibers, for example polyester, polyvinylsulfit or polytetrafluoroethylene. The filter element may be a sinter filter. In particular, the sinter filter can be produced by means of sintering polytetrafluoroethylene, polyethylene or sinter metal. Any other filter elements known per se in the art can also be employed. The filter element serves to filter brake dust particles out of the airflow. The filter element serves to filter any dirt or dirt particles out of the separated water in the airflow. The discharge of brake dust particles into the environment is thus avoided.

In another embodiment the filter element is formed in one piece with the pipe or is attached fluid-tight onto the drainage outlet, particularly by means of molding, clipping, pressing, spraying, gluing, screwing or welding.

Other means of securing the filter element on the pipe are also contemplated. In one embodiment the filter element may, for example, be pushed onto the pipe and placed such that it covers the drainage outlet. The filter element thus acts as a sleeve arranged on the pipe. In yet another embodiment, the filter element can be held in place with clamps or other mechanical fastening elements known in the art. What is more, the pipe itself can be made out of suitable filter element material at the location of the drainage outlet, presenting a one-piece design. It is to be understood that any other means of attaching the filter element to the pipe may be equally advantageously employed.

In another embodiment the water drainage assembly further includes a drainage outlet protection cover for protecting the drainage outlet against environmental impacts, the drainage outlet protection cover including one or more drainage grooves and being fitted onto the drainage outlet.

The drainage outlet protection cover can be provided additionally to the filter element. It is particularly advantageous in a case in which the filter element is susceptible of being damaged by stone chipping or other debris striking against the water drainage assembly and the filter element. The drainage outlet protection cover includes at least one drainage groove. The drainage outlet protection cover may include a plurality of drainage grooves. The drainage groove serves to establish a passageway for the airflow through the drainage outlet, the filter element and the drainage outlet protection cover. In this way, an unobstructed drainage via the water drainage assembly is ensured.

In another embodiment the drainage outlet is located on the pipe at the fluidically lowest point of the pipe in terms of height.

In this way, the separated water is discharged at the fluidically lowest point of the pipe. The separated water may thus not accumulate inside the active brake dust particle filter system where it might clog the airflow cross-section and be sucked into the airflow generator and damage the latter. However, even in this embodiment the drainage outlet may be located at the same height as the brake assembly. In this case, a siphon may be provided for collecting and ultimately discharging the separated water into the ambient space.

In another embodiment the water drainage assembly is arranged on the airflow generator and is for establishing a fluidic connection for the separated water between an interior of the airflow generator and an ambient space of the airflow generator, via the at least one drainage outlet.

In another embodiment the water drainage assembly further includes a filter element for filtering the airflow, the filter element being arranged fluidically between the at least one drainage outlet and the ambient space of the airflow generator.

In another embodiment the filter element is formed in one piece with the airflow generator or is attached fluid-tight onto the at least one drainage outlet, particularly by means of molding, clipping, pressing, spraying, gluing, screwing or welding.

In another embodiment the water drainage assembly further includes a drainage outlet protection cover for protecting the at least one drainage outlet against environmental impacts, the drainage outlet protection cover including one or more drainage grooves and being fitted onto the at least one drainage outlet.

In another embodiment the drainage outlet is located on the airflow generator at the fluidically lowest point of the airflow generator in terms of height.

### BRIEF DESCRIPTION OF DRAWINGS

Further advantages can be seen in the following description of the drawings. The drawings show examples of embodiments of the invention. The drawings, description and claims contain numerous features in combination. The person skilled in the art will expediently consider the features individually and combine them to form further useful combinations. Exemplary embodiments are:
Figure 1 showing an active brake dust particle filter system according to the present invention;
Figure 2 showing a brake assembly and a collector according to the present invention;
Figure 3 showing a detailed top view of the brake assembly and the collector of figure 2;
Figure 4 showing a sectional view of the brake assembly and a first embodiment of an airflow generating assembly along the section line A-A of figure 3;
Figure 5 showing a sectional view of the brake assembly and a second embodiment of the airflow generating assembly of figure 4 along the section line A-A of figure 3;
Figure 6 showing an exploded view of a water drainage assembly arranged on a pipe according to the present invention;
Figure 7 showing a water drainage assembly arranged on an airflow generator according to the present invention; and
Figure 8 showing an exploded view of the water drainage assembly of figure 7.

### DETAILED DESCRIPTION

The figures only show examples and are not to be understood as limiting.

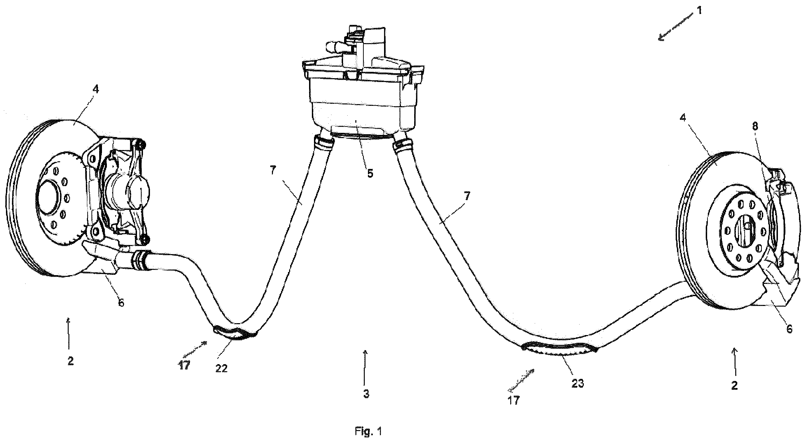

Figure 1 shows an active brake dust particle filter system 1. The active brake dust particle filter system 1 includes two identical brake assemblies 2 in the present embodiment. It also includes an airflow generating assembly 3.

Each brake assembly 2 includes a brake disc 4.

The airflow generating assembly 3 is included of a plurality of different units. Firstly, the airflow generating assembly 3 includes an airflow generator 5. Secondly, the airflow generating assembly 3 includes two collectors 6 or collecting conduits in the present embodiment. The collectors 6 are arranged at least partially around the brake discs 4. Thirdly, the airflow generating assembly 3 also includes two pipes 7 in the present embodiment. The operating principle of the airflow generating assembly 3 is as follows. Upon actuation of the brake assembly 2 a brake pad 8 comes into contact with the brake disc 4. This initiates a braking action. During contact of the brake pad 8 with the brake disc 4 abrasion of the brake pad 8 occurs. This abrasion produces brake dust particles in the ambient air of the brake disc 4. As these brake dust particles are harmful to both humans and nature, they should not escape into the environment. To this end, the brake dust particles are collected within the suction collector 6. At the collector 6 an airflow is then generated. This is achieved by means of the airflow generator 5. The airflow generator 5 establishes, maintains and drives the airflow. The airflow containing the brake dust particles is then sucked from the collector 6 through the pipes 7 towards the airflow generator 5. At the airflow generator 5 the airflow may be subjected to a filter element in order to filter the brake dust particles from the airflow.

This mode of operating the airflow generating assembly 3 works sufficiently well in relatively dry environments. However, problems might occur in humid or wet environments. In such environments the ambient air of the brake assembly 2 typically contains potentially significant amounts of water. Said water might then be sucked into the airflow generating assembly 3. This can potentially damage its components which leads to a deterioration in the performance or damage of the airflow generating assembly 3 and the active brake dust particle filter system 1. In order to alleviate these problems, the airflow generating assembly 3 is provided with additional features. These additional features will be explained in the following paragraphs.

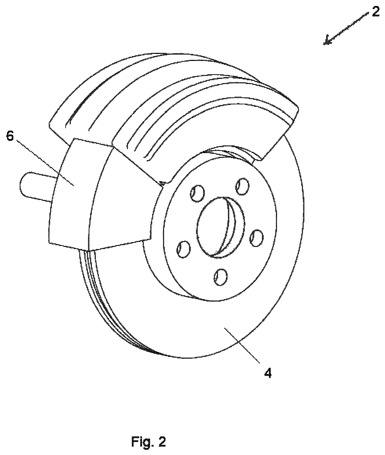

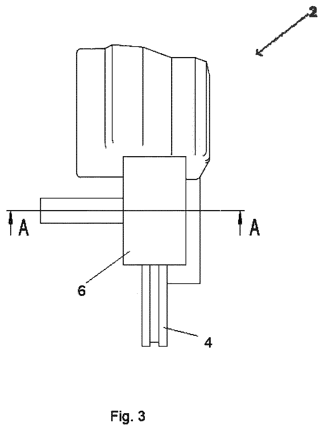

To this purpose, Figure 2 shows a detailed view of the brake assembly 2 with the collector 6. Figure 3 gives a detailed top view of Figure 2 including a section line A-A.

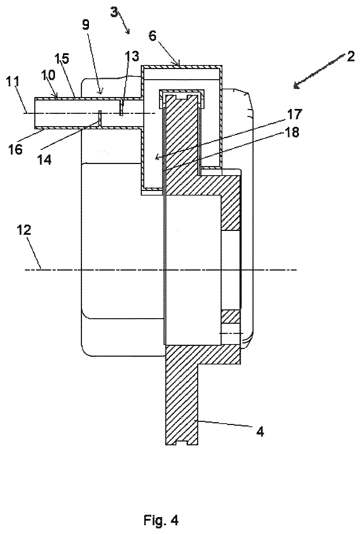

Figure 4 shows a sectional view of the brake assembly 2 and a first embodiment of the airflow generating assembly 3 of figure 1 along the section line A-A of Figure 3 with the additional features.

The airflow generating assembly 3 further includes a water separating assembly 9. The water separating assembly 9 is arranged fluidically directly adjacent to the collector 6. The water separating assembly 9 is fluidically directly connected to the collector 6 in a direction downstream with respect to the airflow. The water separating assembly 9 includes a baffle duct 10. The baffle duct 10 includes a central axis 11 of the baffle duct 10. The central axis 11 of the baffle duct 10 runs substantially parallel to a lateral axis 12 of the brake disc 4. The baffle duct 10 includes a first baffle element 13. The baffle duct 10 includes a second baffle element 14. The first baffle element 13 is arranged on a first wall 15 of the baffle duct 10. The second baffle element 14 is arranged on a second wall 16 of the baffle duct 10. The first baffle element 13 and the second baffle element 14 are arranged on opposite sides in the baffle duct 10. The first baffle element 13 and the second baffle element 14 extend substantially parallel to each other. They extend perpendicularly to the central axis 11 of the baffle duct 10. The first baffle element 13 provides a deflection angle for the airflow of 90°. The second baffle element 14 provides a deflection angle for the airflow of 90°. The water separating assembly 9 serves as an inertial separator. The water dragged along in the airflow cannot follow the deflection and re-direction of the latter and is therefore separated from the airflow. This embodiment is only an example, and the first baffle element 13 and the second baffle element 14 may be substantially perpendicular to each other, may have different angles with respect to the central axis 11, and may even have a twist or screw geometry.

The thusly separated water can then be drained from the airflow generating assembly 3. To this end, a water drainage assembly 17 is provided. The water drainage assembly 17 includes at least one drainage outlet 18. The separated water accumulates in the water drainage assembly 17 and exits the airflow generating assembly 3 via the drainage outlet 18 into the ambient space of the brake assembly 2. Negative impacts of water within the airflow generating assembly 3 can thus be eliminated.

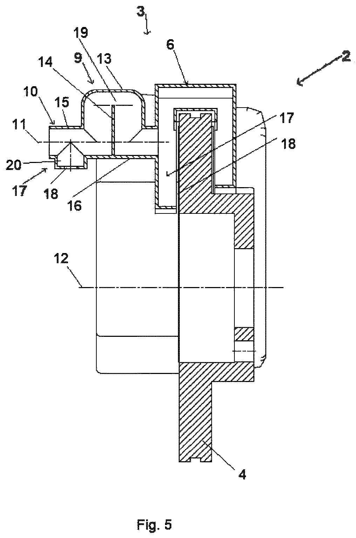

Figure 5 shows a sectional view of the brake assembly 2 and a second embodiment of the airflow generating assembly 3 of Figure 3 along the section line A-A. In this embodiment the first baffle element 13 is formed as a chamber-like protrusion within the first wall 15 of the baffle duct 10. The chamber-like protrusion defines a receiving volume 19 for the airflow. In this receiving volume 19 the airflow is deflected at a deflection angle of 180°. The second baffle element 14 is arranged at the second wall 16 of the baffle duct 10. It is oriented substantially perpendicular to the central axis 11 of the baffle duct 10. The second baffle element 14 is formed as a baffle plate. The second baffle element 14 protrudes at least in sections into the receiving volume 19 of the first baffle element 13. The second baffle element 14 deflects the airflow by 90°. In this embodiment a water collecting reservoir 20 is additionally provided. It serves to collect the water separated by means of the water separating assembly 9. The water collecting reservoir 20 is be formed as a protrusion within the baffle duct 10. The water collecting reservoir 20 includes the drainage outlet 18 of the water drainage assembly 17. The separated water can thus be discharged into an ambient space of the water separating assembly 9.

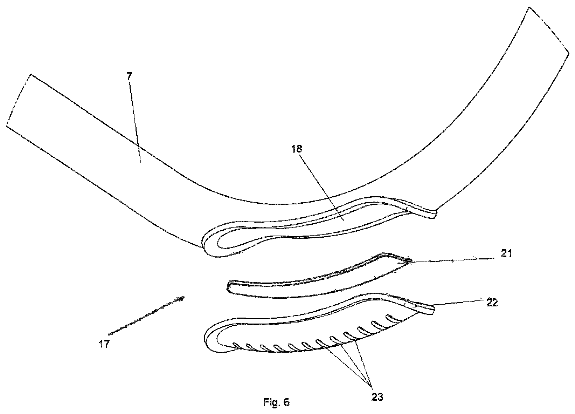

Figure 6 shows an exploded view of the water drainage assembly 17 according to a different or additional embodiment. In this embodiment, the water drainage assembly 17 is arranged on the pipe 7. The drainage outlet 18 extends substantially parallel to a longitudinal direction of the pipe 7 at least in sections of the latter. In the present embodiment a filter element 21 is provided fluidically between the drainage outlet 18 and an ambient space of the pipe 7. The filter element 21 serves to filter brake dust particles out of the airflow through the pipe 7. It also may serve to filter out dirt or dirt particles out of the separated water being discharged through the drainage outlet 18.

Moreover, a drainage outlet protection cover 22 is provided in this embodiment. The drainage outlet protection cover 22 is particularly advantageous in a case in which the filter element 21 is susceptible of being damaged by stone chipping or other debris striking against the water drainage assembly 17 and the filter element 21. The drainage outlet protection cover 22 includes a plurality of drainage grooves 23. The drainage grooves 23 serve to establish a passageway for the airflow through the drainage outlet 18, the filter element 21 and the drainage outlet protection cover 22. In this way, an unobstructed drainage via the water drainage assembly 17 is ensured. The drainage outlet protection cover 22 can be, e.g., glued, welded or screwed onto the pipe 7.

Eventually the drainage outlet 18 is advantageously located on the pipe 7 at the fluidically lowest point of the pipe 7. This is best seen in Figure 1. Alternatively or additionally, the drainage outlet 18 may be located on the pipe 7 at any fluidically low point of the pipe 7, for example, local to the airflow generator 5.

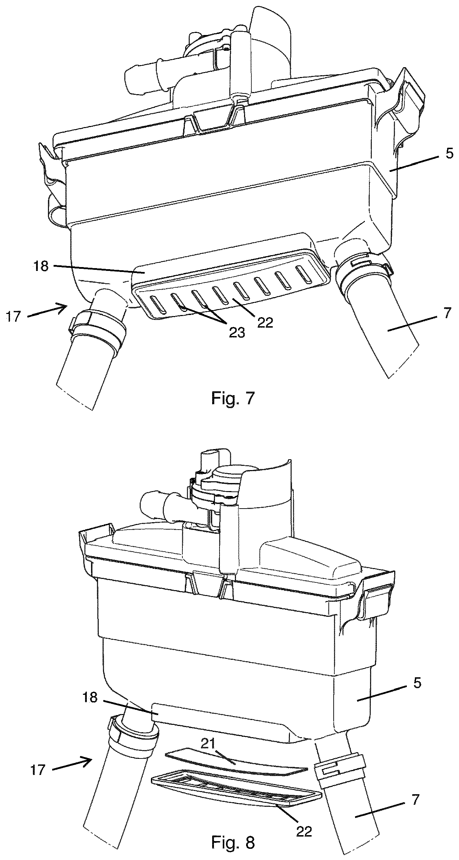

Figures 7 and 8 show a water drainage assembly 24 according to a different or additional embodiment. In this embodiment, the water drainage assembly 17 is arranged on the airflow generator 5. The drainage outlet 18 extends substantially parallel to a longitudinal direction of a bottom surface of the airflow generator 5 at least in a section of the latter, and extends between the pipes 7. In the present embodiment the filter element 21 is provided fluidically between the drainage outlet 18 and an ambient space of the airflow generator 5. The filter element 21 serves to filter brake dust particles out of the airflow through the airflow generator 5. It also may serve to filter out dirt or dirt particles out of the separated water being discharged through the drainage outlet 18.

Moreover, the drainage outlet protection cover 22 is provided in this embodiment. The drainage outlet protection cover 22 is particularly advantageous in a case in which the filter element 21 is susceptible of being damaged by stone chipping or other debris striking against the water drainage assembly 17 and the filter element 21. The drainage outlet protection cover 22 includes the plurality of drainage grooves 23. The drainage grooves 23 serve to establish a passageway for the airflow through the drainage outlet 18, the filter element 21 and the drainage outlet protection cover 22. In this way, an unobstructed drainage via the water drainage assembly 17 is ensured. The drainage outlet protection cover 22 can be, e.g., glued, welded or screwed onto the airflow generator 5.

Eventually the drainage outlet 18 is advantageously located on the airflow generator 5 at the fluidically lowest point of the airflow generator 5.

### REFERENCE SIGNS LIST

- 1: active brake dust particle filter system
- 2: brake assembly
- 3: suction assembly
- 4: brake disc
- 5: suction driving unit
- 6: suction collecting unit
- 7: suction conducting pipe
- 8: brake pad
- 9: inertial separating member
- 10: baffle duct
- 11: central axis of the baffle duct
- 12: lateral axis of the brake disc
- 13: first baffle element
- 14: second baffle element
- 15: first wall of the baffle duct
- 16: second wall of the baffle duct
- 17: water drainage member
- 18: drainage outlet
- 19: receiving volume for suction volume flow
- 20: water collecting reservoir
- 21: filter element
- 22: drainage outlet protection cover
- 23: drainage grooves

## Claims

1. An active brake dust particle filter system (1) comprising:
an airflow generator (5) configured to generate an airflow;
at least one collector (6) arranged at least partially surrounding at least one brake disc (4) and configured to collect brake dust particles from an ambient air of the at least one brake disc (4) via the airflow;
at least one pipe (7) connecting the airflow generator (5) and the at least one collector (6) and for conducting the airflow from the at least one collector (6) towards the airflow generator (5);
a water separating assembly (9) comprising at least one baffle element (13, 14) configured to separate water from the airflow; and
a water drainage assembly (17) comprising at least one drainage outlet (18) for draining the separated water from an airflow generating assembly (3),
**characterised in that**
the water separating assembly (9) is arranged directly on the at least one collector (6) and fluidically downstream with respect to the airflow.

2. The active brake dust particle filter system (1) according to claim 1, wherein the water separating assembly (9) comprises at least two baffle elements (13, 14) arranged substantially parallel and opposite to each other as well as arranged substantially perpendicular to the airflow.

3. The active brake dust particle filter system (1) according to claim 1, wherein the water separating assembly (9) comprises at least one baffle element (13) formed as a chamber-like protrusion, and at least one other baffle element (14) extending at least in a section into the chamber-like protrusion.

4. The active brake dust particle filter system (1) according to any of the claims 1 to 4, wherein the water drainage assembly (17) is arranged directly on the water separating assembly (9) and is for establishing a fluidic connection for the separated water between an interior of the water separating assembly (9) and an ambient space of the water separating assembly (9).

5. The active brake dust particle filter system (1) according to any of the claims 1 to 4, wherein the water drainage assembly (17) is arranged on the at least one pipe (7) and is for establishing a fluidic connection for the separated water between an interior of the at least one pipe (7) and an ambient space of the at least one pipe (7), via the at least one drainage outlet (18).

6. The active brake dust particle filter system (1) according to claim 5, wherein the water drainage assembly (17) further comprises a filter element (21) for filtering the airflow, the filter element (21) being arranged fluidically between the at least one drainage outlet (18) and the ambient space of the at least one pipe (7).

7. The active brake dust particle filter system (1) according to claim 6, wherein the filter element (21) is formed in one piece with the at least one pipe (7) or is attached fluid-tight onto the at least one drainage outlet (18).

8. The active brake dust particle filter system (1) according to any of the claims 5 to 7, wherein the water drainage assembly (17) further comprises a drainage outlet protection cover (22) for protecting the at least one drainage outlet (18) against environmental impacts, the drainage outlet protection cover (22) comprising one or more drainage grooves (23) and being fitted onto the at least one drainage outlet (18).

9. The active brake dust particle filter system (1) according to any of the claims 5 to 8, wherein the at least one drainage outlet (18) is located on the at least one pipe (7) at the fluidically lowest point of the at least one pipe (7) and/or at any fluidically low point of the at least one pipe (7).

10. The active brake dust particle filter system (1) according to any of the claims 1 to 3, wherein the water drainage assembly (17) is arranged on the airflow generator (5) and is for establishing a fluidic connection for the separated water between an interior of the airflow generator (5) and an ambient space of the airflow generator (5), via the at least one drainage outlet (18).

11. The active brake dust particle filter system (1) according to claim 10, wherein the water drainage assembly (17) further comprises a filter element (21) for filtering the airflow, the filter element (21) being arranged fluidically between the at least one drainage outlet (18) and the ambient space of the airflow generator (5).

12. The active brake dust particle filter system (1) according to claim 11, wherein the filter element (21) is formed in one piece with the airflow generator (5) or is attached fluid-tight onto the at least one drainage outlet (18).

13. The active brake dust particle filter system (1) according to any of the claims 10 to 12, wherein the water drainage assembly (17) further comprises a drainage outlet protection cover (22) for protecting the at least one drainage outlet (18) against environmental impacts, the drainage outlet protection cover (22) comprising one or more drainage grooves (23) and being fitted onto the at least one drainage outlet (18).

14. The active brake dust particle filter system (1) according to any of the claims 10 to 13, wherein the at least one drainage outlet (18) is located on the airflow generator (5) at the fluidically lowest point of the airflow generator (5).

## Patentansprüche

1. Aktives Bremsstaubpartikelfiltersystem (1), umfassend:
einen Luftstromerzeuger (5), der so ausgelegt ist, dass er einen Luftstrom erzeugt;
mindestens einen Sammler (6), der so angeordnet ist, dass er mindestens eine Bremsscheibe (4) mindestens teilweise umgibt, und dazu ausgelegt ist, Bremsstaubpartikel aus der Umgebungsluft der mindestens einen Bremsscheibe (4) über den Luftstrom aufzufangen;
mindestens ein Rohr (7), das den Luftstromerzeuger (5) und den mindestens einen Sammler (6) verbindet und den Luftstrom von dem mindestens einen Sammler (6) in Richtung des Luftstromerzeugers (5) leitet;
eine Wasserabscheidevorrichtung (9) umfassend mindestens ein Prallelement (13, 14), das dazu ausgelegt ist, Wasser aus dem Luftstrom abzuscheiden; und
eine Wasserablaufvorrichtung (17) umfassend mindestens eine Ablauföffnung (18) zum Ableiten des abgeschiedenen Wassers aus der Luftstromerzeugungsvorrichtung (3),
**dadurch gekennzeichnet, dass**
die Wasserabscheidevorrichtung (9) direkt an dem mindestens einen Sammler (6) und in Bezug auf den Luftstrom stromabwärts angeordnet ist.

2. Aktives Bremsstaubpartikelfiltersystem (1) nach Anspruch 1, wobei die Wasserabscheidevorrichtung (9) mindestens zwei Prallelemente (13, 14) umfasst, die im Wesentlichen parallel und einander gegenüberliegend sowie im Wesentlichen senkrecht zum Luftstrom angeordnet sind.

3. Aktives Bremsstaubpartikelfiltersystem (1) nach Anspruch 1, wobei die Wasserabscheidevorrichtung (9) mindestens ein als kammerartigen Vorsprung ausgebildetes Prallelement (13) und mindestens ein weiteres Prallelement (14) umfasst, das sich zumindest abschnittsweise in den kammerartigen Vorsprung erstreckt.

4. Aktives Bremsstaubpartikelfiltersystem (1) nach einem der Ansprüche 1 bis 4, wobei die Wasserablaufvorrichtung (17) direkt an der Wasserabscheidevorrichtung (9) angeordnet ist und dazu dient, eine strömungstechnische Verbindung für das abgeschiedene Wasser zwischen einem Innenraum der Wasserabscheidevorrichtung (9) und einem Umgebungsraum der Wasserabscheidevorrichtung (9) herzustellen.

5. Aktives Bremsstaubpartikelfiltersystem (1) nach einem der Ansprüche 1 bis 4, wobei die Wasserablaufvorrichtung (17) an dem mindestens einen Rohr (7) angeordnet ist und dazu dient, über die mindestens eine Ablauföffnung (18) eine strömungstechnische Verbindung für das abgeschiedene Wasser zwischen einem Innenraum des mindestens einen Rohrs (7) und einem Umgebungsraum des mindestens einen Rohrs (7) herzustellen.

6. Aktives Bremsstaubpartikelfiltersystem (1) nach Anspruch 5, wobei die Wasserablaufvorrichtung (17) ferner ein Filterelement (21) zum Filtern des Luftstroms umfasst, wobei das Filterelement (21) strömungstechnisch zwischen der mindestens einen Ablauföffnung (18) und dem Umgebungsraum des mindestens einen Rohrs (7) angeordnet ist.

7. Aktives Bremsstaubpartikelfiltersystem (1) nach Anspruch 6, wobei das Filterelement (21) einstückig mit dem mindestens einen Rohr (7) ausgebildet ist oder fluiddicht an der mindestens einen Ablauföffnung (18) angebracht ist.

8. Aktives Bremsstaubpartikelfiltersystem (1) nach einem der Ansprüche 5 bis 7, wobei die Wasserablaufvorrichtung (17) ferner eine Ablaufschutzabdeckung (22) zum Schutz der mindestens einen Ablauföffnung (18) vor Umwelteinflüssen umfasst, wobei die Ablaufschutzabdeckung (22) eine oder mehrere Ablaufrinnen (23) aufweist und auf der mindestens einen Ablauföffnung (18) aufgesetzt ist.

9. Aktives Bremsstaubpartikelfiltersystem (1) nach einem der Ansprüche 5 bis 8, wobei sich die mindestens eine Ablauföffnung (18) an dem mindestens einen Rohr (7) am strömungstechnisch tiefsten Punkt des mindestens einen Rohrs (7) und/oder an einem beliebigen strömungstechnisch tief gelegenen Punkt des mindestens einen Rohrs (7) befindet.

10. Aktives Bremsstaubpartikelfiltersystem (1) nach einem der Ansprüche 1 bis 3, wobei die Wasserablaufvorrichtung (17) an dem Luftstromerzeuger (5) angeordnet ist und dazu dient, über die mindestens eine Ablauföffnung (18) eine strömungstechnische Verbindung für das abgeschiedene Wasser zwischen einem Innenraum des Luftstromerzeugers (5) und einem Umgebungsraum des Luftstromerzeugers (5) herzustellen.

11. Aktives Bremsstaubpartikelfiltersystem (1) nach Anspruch 10, wobei die Wasserablaufvorrichtung (17) ferner ein Filterelement (21) zum Filtern des Luftstroms umfasst, wobei das Filterelement (21) strömungstechnisch zwischen der mindestens einen Ablauföffnung (18) und dem Umgebungsraum des Luftstromerzeugers (5) angeordnet ist.

12. Aktives Bremsstaubpartikelfiltersystem (1) nach Anspruch 11, wobei das Filterelement (21) einstückig mit dem Luftstromerzeuger (5) ausgebildet ist oder fluiddicht an der mindestens einen Ablauföffnung (18) angebracht ist.

13. Aktives Bremsstaubpartikelfiltersystem (1) nach einem der Ansprüche 10 bis 12, wobei die Wasserablaufvorrichtung (17) ferner eine Ablaufschutzabdeckung (22) zum Schutz der mindestens einen Ablauföffnung (18) vor Umwelteinflüssen umfasst, wobei die Ablaufschutzabdeckung (22) eine oder mehrere Ablaufrinnen (23) aufweist und auf der mindestens einen Ablauföffnung (18) aufgesetzt ist.

14. Aktives Bremsstaubpartikelfiltersystem (1) nach einem der Ansprüche 10 bis 13, wobei sich die mindestens eine Ablauföffnung (18) an dem Luftstromerzeuger (5) am strömungstechnisch tiefsten Punkt des Luftstromerzeugers (5) befindet.

## Revendications

1. Système actif de filtre à particules de poussière de frein (1) comprenant:
un générateur de flux d'air (5) configuré pour générer un flux d'air;
au moins un collecteur (6) disposé de manière à entourer au moins partiellement au moins un disque de frein (4) et configuré pour collecter les particules de poussière de frein de l'air ambiant du disque de frein (4), au moins au nombre d'un, via le flux d'air;
au moins un conduit (7) reliant le générateur de flux d'air (5) et le collecteur (6), au moins au nombre d'un, et destiné à acheminer le flux d'air depuis le collecteur (6), au moins au nombre d'un, vers le générateur de flux d'air (5);
un dispositif de séparation d'eau (9) comprenant au moins un élément déflecteur (13, 14) configuré pour séparer l'eau du flux d'air; et
un dispositif de drainage d'eau (17) comprenant au moins une sortie de drainage (18) destinée à évacuer l'eau séparée du dispositif générateur de flux d'air (3),
**caractérisé en ce que**
le dispositif de séparation d'eau (9) est disposé directement sur le collecteur (6), au moins au nombre d'un, et fluidiquement en aval par rapport au flux d'air.

2. Système actif de filtre à particules de poussière de frein (1) selon la revendication 1, dans lequel le dispositif de séparation d'eau (9) comprend au moins deux éléments déflecteurs (13, 14) disposés sensiblement parallèlement et en vis-à-vis l'un de l'autre, ainsi que sensiblement perpendiculairement au flux d'air.

3. Système actif de filtre à particules de poussière de frein (1) selon la revendication 1, dans lequel le dispositif de séparation d'eau (9) comprend au moins un élément déflecteur (13) formé comme une saillie en forme de chambre, et au moins un autre élément déflecteur (14) s'étendant au moins partiellement dans la saillie en forme de chambre.

4. Système actif de filtre à particules de poussière de frein (1) selon l'une quelconque des revendications 1 à 4, dans lequel le dispositif de drainage d'eau (17) est disposé directement sur le dispositif de séparation d'eau (9) et sert à établir une liaison fluidique pour l'eau séparée entre l'intérieur du dispositif de séparation d'eau (9) et un espace ambiant du dispositif de séparation d'eau (9).

5. Système actif de filtre à particules de poussière de frein (1) selon l'une quelconque des revendications 1 à 4, dans lequel le dispositif de drainage d'eau (17) est disposé sur le tuyau (7), au moins au nombre d'un, et sert à établir une liaison fluidique pour l'eau séparée entre l'intérieur du tuyau (7), au moins au nombre d'un, et un espace environnant du tuyau (7), au mois au nombre d'un, via la sortie de drainage (18), au moins au nombre d'une.

6. Système actif de filtre à particules de poussière de frein (1) selon la revendication 5, dans lequel le dispositif de drainage d'eau (17) comprend en outre un élément filtrant (21) destiné à filtrer le flux d'air, l'élément filtrant (21) étant disposé fluidiquement entre la sortie de drainage (18), au moins au nombre d'une, et l'espace ambiant du tuyau (7), au moins au nombre d'un.

7. Système actif de filtre à particules de poussière de frein (1) selon la revendication 6, dans lequel l'élément filtrant (21) est formé d'un seul tenant avec le tuyau (7), au moins au nombre d'un, ou est fixé de manière étanche aux fluides sur la sortie de drainage (18), au moins au nombre d'une.

8. Système actif de filtre à particules de poussière de frein (1) selon l'une quelconque des revendications 5 à 7, dans lequel le dispositif de drainage d'eau (17) comprend en outre un couvercle de protection de la sortie de drainage (22) destiné à protéger la sortie de drainage (18), au moins au nombre d'une, contre les influences environnementales, le couvercle de protection de la sortie de drainage (22) comprenant une ou plusieurs rainures de drainage (23) et étant monté sur la sortie de drainage (18), au moins au nombre d'une.

9. Système actif de filtre à particules de poussière de frein (1) selon l'une quelconque des revendications 5 à 8, dans lequel la sortie de drainage (18), au moins au nombre d'une, est située sur le tuyau (7), au moins au nombre d'un, fluidiquement au point le plus bas du tuyau (7), au moins au nombre d'un, et/ou fluidiquement à n'importe quel point bas du tuyau (7), au moins au nombre d'un.

10. Système actif de filtre à particules de poussière de frein (1) selon l'une quelconque des revendications 1 à 3, dans lequel le dispositif de drainage d'eau (17) est disposé sur le générateur de flux d'air (5) et sert à établir une liaison fluidique pour l'eau séparée entre l'intérieur du générateur de flux d'air (5) et un espace ambiant du générateur de flux d'air (5), via la sortie de drainage (18), au moins au nombre d'une.

11. Système actif de filtre à particules de poussière de frein (1) selon la revendication 10, dans lequel le dispositif de drainage d'eau (17) comprend en outre un élément filtrant (21) destiné à filtrer le flux d'air, l'élément filtrant (21) étant disposé fluidiquement entre la sortie de drainage (18), au moins au nombre d'une, et l'espace ambiant du générateur de flux d'air (5).

12. Système actif de filtre à particules de poussière de frein (1) selon la revendication 11, dans lequel l'élément filtrant (21) est formé d'un seul tenant avec le générateur de flux d'air (5) ou est fixé de manière étanche aux fluides sur la sortie de drainage (18), au moins au nombre d'une.

13. Système actif de filtre à particules de poussière de frein (1) selon l'une quelconque des revendications 10 à 12, dans lequel le dispositif de drainage d'eau (17) comprend en outre un couvercle de protection de la sortie de drainage (22) destiné à protéger la sortie de drainage (18), au moins au nombre d'une, contre les influences environnementales, le couvercle de protection de la sortie de drainage (22) comprenant une ou plusieurs rainures de drainage (23) et étant monté sur la sortie de drainage (18), au moins au nombre d'une.

14. Système actif de filtre à particules de poussière de frein (1) selon l'une quelconque des revendications 10 à 13, dans lequel la sortie de drainage (18), au moins au nombre d'une, est située sur le générateur de flux d'air (5) fluidiquement au point le plus bas du générateur de flux d'air (5).
